# EUROPÄISCHE PATENTSCHRIFT

(11) **EP 2 394 501 B1**
(45) Veröffentlichungstag und Bekanntmachung des Hinweises auf die Patenterteilung: **20.04.2016**
(21) Anmeldenummer: 11000986.7
(22) Anmeldetag: 08.02.2011
(51) Int. Cl.: A01B 63/00, A01G 17/02

(54) **Steuervorrichtung und Verfahren zur Steuerung einer an einem Fahrzeug anordbaren Haltevorrichtung für eine Maschine zur Pflanzenbearbeitung**
Control device and method for controlling a plant processing machine holder device which can be attached to a vehicle
Dispositif de commande et procédé de commande d'un dispositif de retenue pouvant être agencé sur un véhicule pour une machine destinée à la préparation de plantes

(30) Priorität: 08.02.2010 DE 102010007276
(43) Veröffentlichungstag der Anmeldung: 14.12.2011
(73) Patentinhaber: ERO-GERÄTEBAU GmbH, 55469 Niederkumbd (DE)
(72) Erfinder: Erbach, Michael, 55469 Niederkumbd (DE)
(74) Vertreter: Lemcke, Brommer & Partner Patentanwälte Partnerschaft mbB

(56) Entgegenhaltungen:
- EP-A1- 0 951 813
- EP-A1- 1 145 619
- EP-A1- 1 440 617
- EP-A1- 1 709 859
- WO-A2-03/073833
- DE-A1-102005 055 980

## Beschreibung

Die Erfindung betrifft ein Verfahren zur Steuerung einer an einem Fahrzeug anordbaren Haltevorrichtung für eine Maschine zur Pflanzenbearbeitung gemäß Oberbegriff des Anspruchs 1, eine Steuervorrichtung zur Steuerung solch einer Haltevorrichtung gemäß Oberbegriff des Anspruchs 9 sowie eine solche Haltevorrichtung gemäß Oberbegriff des Anspruchs 18.

Es sind Haltevorrichtungen bekannt, um Maschinen an einem Fahrzeug zu befestigen und vom Fahrzeug aus mittels der Maschine Arbeitsvorgänge durchzuführen. Die Haltevorrichtung ist hierbei mittels einer Steuerung derart steuerbar, dass eine an die Haltevorrichtung angeordnete Maschine mittels der Haltevorrichtung zu einer Medianebene des Fahrzeugs hin- und/oder von dieser wegbewegt werden kann. Medianebene bezeichnet hierbei und im Folgenden eine bei Normalstellung des Fahrzeugs, d. h. Stellung auf einem horizontalen, ebenen Boden senkrecht stehende Ebene, welche in etwa durch die Mitte des Fahrzeugs verläuft und parallel zur Fahrtrichtung des Fahrzeugs ist. Wobei Fahrtrichtung hier und im Folgenden die Fahrtrichtung des Fahrzeugs bei Geradeausfahrt bezeichnet.

Solche Haltevorrichtungen sind bekannt, um Maschinen an einem Fahrzeug mittels der Haltevorrichtung zu befestigen und vom Fahrzeug aus mittels der Maschine Arbeitsvorgänge an Pflanzen durchzuführen. Typischerweise werden hierbei Pflanzen, die sich in Fahrtrichtung rechts oder links des Fahrzeugs befinden, bearbeitet. Solche Haltevorrichtungen finden beispielsweise im Weinbau, in der Garten- oder Baumpflege Einsatz.

Insbesondere im Weinbau sind vorgenannte Haltevorrichtungen bekannt, um Maschinen an einem Traktor zu befestigen und während der Fahrt des Traktors durch zeilenartig angeordnete Weinreben diese mittels der Maschine zu bearbeiten, beispielsweise mittels eines Sauggebläses zum Entfernen von Laub oder mittels einer Schneidvorrichtung.

Es sind Haltevorrichtungen bekannt, die ein oder mehrere verschwenkbare Arme aufweisen, wie beispielsweise in EP 0 951 813 A1 beschrieben. Ebenso sind Haltevorrichtungen bekannt, bei denen ein Arm der Haltevorrichtung eine lineare Bewegung senkrecht zur Fahrtrichtung des Fahrzeugs ausführt, wie beispielsweise in DE 10 2007 019 185 A1 beschrieben.

DE 10 2005 055 980 offenbart ein Verfahren zur Steuerung einer Haltevorrichtung, welche mit Hilfe eines Sensors die Kipprichtung detektiert und die festgestellte Seitenneigung mit Hilfe einer Servoeinrichtung selbsttätig ausgleicht.

Die Steuerung solcher Haltevorrichtungen erfolgt derart, dass durch eine entsprechende Bewegung eines oder mehrerer Arme die Maschine zu einer Medianebene des Fahrzeugs hin- und/oder von dieser wegbewegt wird. Typischerweise erfolgt die Steuerung der Haltevorrichtung manuell mittels eines Bedienhebels durch den Benutzer. Ebenso ist es aus der DE 10 2007 019 185 A1 bekannt, ein Tastelement mit der Steuereinheit derart zu verbinden, dass durch Anlage des Tastelements an die sich seitlich neben dem Fahrzeug befindlichen Pflanzen eine Steuerung der Haltevorrichtung derart erfolgt, dass automatisch ein in etwa konstanter Abstand der Maschine zu den Pflanzen eingehalten wird.

Die zunehmende technische Komplexität der Maschinen zur Pflanzenbearbeitung führt zu einem hohen Gewicht der Maschinen, so sind Maschinen zur Pflanzenbearbeitung mit einem Eigengewicht von bis zu 750 kg im Weinbau durchaus üblich. Ebenso ist es wünschenswert, eine möglichst hohe Fahrgeschwindigkeit während der Pflanzenbearbeitung zu ermöglichen, um die Gesamtarbeitszeit zu verringern. Das hohe Gewicht der Maschinen einerseits und die hohe Fahrgeschwindigkeit andererseits können jedoch eine Instabilität des Fahrzeugs bewirken und somit ein Sicherheitsrisiko darstellen.

Der vorliegenden Erfindung liegt daher die Aufgabe zugrunde, ein Verfahren zur Steuerung einer Haltevorrichtung, eine Steuervorrichtung für eine Haltevorrichtung und eine solche Haltevorrichtung zu schaffen, welche die Stabilität während der Pflanzenbearbeitung bei fahrendem Fahrzeug erhöht, hierdurch eine höhere Sicherheit und/oder eine höhere Bearbeitungsgeschwindigkeit ermöglicht.

Gelöst ist diese Aufgabe durch ein Verfahren zur Steuerung einer an einem Fahrzeug anordbaren Haltevorrichtung für eine Maschine zur Pflanzenbearbeitung gemäß Anspruch 1, durch eine Steuervorrichtung zur Steuerung einer an ein Fahrzeug anordbaren Haltevorrichtung für eine Maschine zur Pflanzenbearbeitung gemäß Anspruch 9 sowie durch eine Haltevorrichtung für eine Maschine zur Pflanzenbearbeitung gemäß Anspruch 18. Vorzugsweise Ausführungsformen des erfindungsgemäßen Verfahrens finden sich in den Ansprüchen 2 bis 8. Vorzugsweise Ausführungsformen der erfindungsgemäßen Steuervorrichtung finden sich in den Ansprüchen 10 bis 17.

Die Erfindung ist in der Erkenntnis der Anmelderin begründet, dass insbesondere seitliche Kippbewegungen des Fahrzeugs aufgrund von Bodenunebenheiten zu erheblichen Auslenkungen insbesondere der Maschine führen, so dass die Stabilität des Fahrzeugs und damit die Sicherheit gefährdet ist und Beschädigungen an der Maschine und/oder der Pflanze auftreten können. Diese seitlichen Verkippungen stehen somit auch einer Erhöhung der Fahrgeschwindigkeit entgegen.

Bei dem erfindungsgemäßen Verfahren zur Steuerung erfolgt die Steuerung derart, dass bei an dem Fahrzeug angeordneter Haltevorrichtung und an der Haltevorrichtung angeordneter Maschine die Maschine mittels der Haltevorrichtung zu einer Medianebene des Fahrzeugs hin- und/oder von dieser wegbewegt wird. Es liegt hierbei im Rahmen der Erfindung, dass die Maschine lediglich zu der Medianebene hin- oder lediglich von dieser wegbewegt wird, dass die Maschine sowohl zu der Medianebene hin- als auch von ihr wegbewegt wird und/oder die Medianebene durchtritt und somit zuerst zu ihr hin und anschließend von ihr wegbewegt wird.

Wesentlich ist, dass bei dem erfindungsgemäßen Verfahren eine aufgrund des Fahrens über Bodenunebenheiten verursachte seitliche Kippbewegung des Fahrzeugs und/oder eine Bodenunebenheit, die bei Überfahren zu einer seitlichen Kippbewegung des Fahrzeugs führt, mittels einer Steuereinrichtung, welche eine Detektionseinheit umfasst, zumindest hinsichtlich der Kipprichtung detektiert wird. Die Kipprichtung gibt hierbei an, ob das Fahrzeug in Fahrtrichtung nach rechts oder nach links kippt, d. h. ob die Kippbewegung um eine parallel zur Fahrtrichtung stehende Kippachse bei Blick in Fahrtrichtung im Uhrzeigersinn oder gegen den Uhrzeigersinn verläuft.

Die Haltevorrichtung wird mittels der Steuervorrichtung automatisch derart gesteuert, dass abhängig von der detektierten Kippbewegung und/oder Bodenunebenheit die Maschine entgegen der Kipprichtung des Fahrzeugs an die Medianebene hin- und/oder von dieser wegbewegt wird, so dass eine durch das seitliche Kippen des Fahrzeugs verursachte seitliche Auslenkung der Maschine vermieden oder zumindest verringert wird.

Durch das erfindungsgemäße Verfahren wird somit eine seitliche Kippbewegung des Fahrzeugs und/oder eine Bodenunebenheit, die bei Überfahren zu einer seitlichen Kippbewegung des Fahrzeugs führt, detektiert. Die seitliche Auslenkung der Maschine, welche ohne Anwendung des erfindungsgemäßen Verfahrens aufgrund der seitlichen Kippbewegung des Fahrzeugs erfolgen würde, wird jedoch durch die Gegenbewegung der Maschine entgegen der Kipprichtung des Fahrzeugs vermieden oder zumindest verringert.

Hierdurch wird erzielt, dass einerseits die Maschine nicht oder in geringerem Umfang durch die Kippbewegung ihren Abstand zu der zu bearbeitenden Pflanze ändert und somit das Risiko einer Beschädigung von Pflanze und/oder Maschine aufgrund der Kippbewegung ausgeschlossen oder zumindest verringert wird. Weiterhin wird die Stabilität des Fahrzeugs erhöht, da durch die Gegenbewegung der Maschine die seitlich beschleunigte Masse bei der Kippbewegung des Fahrzeugs verringert wird. Hierdurch wird die Fahrsicherheit erhöht und eine erhöhte Fahrgeschwindigkeit bei der Bearbeitung ist möglich. Weiterhin wird die Sicherheit dadurch erhöht, dass die Gegenbewegung der Maschine automatisch mittels der Steuereinheit erfolgt und der Benutzer somit nicht manuell eine eventuelle Gegenbewegung einleiten muss, die seine Aufmerksamkeit auf die Fahrstrecke beeinträchtigen könnte.

Wesentlich bei dem erfindungsgemäßen Verfahren ist, dass zumindest die Kipprichtung der Kippbewegung detektiert bzw. die Bodenunebeneinheit detektiert und hieraus auf die Kipprichtung geschlossen wird, so dass die Gegenbewegung wie zuvor beschrieben automatisch eingeleitet werden kann. Vorzugsweise erfolgt zusätzlich die Detektion des Kippwinkels der Kippbewegung oder einer analogen Größe wie beispielsweise der seitlichen Auslenkung der Maschine aufgrund der Kippbewegung, so dass mittels der Steuereinrichtung die Maschine einerseits entgegen der Kipprichtung des Fahrzeugs bewegt wird und andererseits um eine Wegstrecke die der aufgrund der Kippbewegung zu erwartenden Auslenkung der Maschine ohne Anwendung des erfindungsgemäßen Verfahrens entspricht.

Die erfindungsgemäße Steuervorrichtung zur Steuerung einer an ein Fahrzeug anordbaren Haltevorrichtung für eine Maschine zur Pflanzenbearbeitung ist ausgebildet zur Steuerung der Haltevorrichtung derart, dass bei an dem Fahrzeug angeordneter Haltevorrichtung abhängig von Steuersignalen der Steuervorrichtung die an der Haltevorrichtung angebrachte Maschine mittels der Haltevorrichtung zu einer Medianebene des Fahrzeugs hin- und von dieser wegbewegbar ist. Wesentlich ist, dass die Steuervorrichtung eine Detektionseinheit umfasst und derart ausgebildet ist, dass eine aufgrund des Fahrens über Bodenunebenheiten verursachte seitliche Kippbewegung des Fahrzeugs und/oder eine Bodenunebenheit, die bei Überfahren zu einer seitlichen Kippbewegung des Fahrzeugs führt, detektierbar ist und die Haltevorrichtung mittels der Steuervorrichtung automatisch derart steuerbar ist, dass abhängig von einer detektierten seitlichen Kippbewegung und/oder Bodenunebenheit die Maschine entgegen der Kipprichtung des Fahrzeugs an die Medianebene hin- und/oder von dieser wegbewegbar ist, so dass eine durch das seitliche Kippen des Fahrzeugs seitliche Auslenkung der Maschine vermieden oder zumindest verringert wird. Die erfindungsgemäße Steuervorrichtung ist somit zur Durchführung des zuvor beschriebenen erfindungsgemäßen Verfahrens geeignet ausgebildet und weist somit die zuvor beschriebenen Vorteile auf.

Es liegt im Rahmen der Erfindung, dass die seitliche Kippbewegung des Fahrzeugs detektiert wird. Dies ist mit herkömmlichen Detektoren, wie beispielsweise Gyro-Sensoren durchführbar, so dass anhand der Messdaten der Sensoren sowohl die Kipprichtung, als auch der aktuelle Kippwinkel detektierbar ist und eine entsprechende Gegenbewegung der Maschine durch automatische Steuerung der Haltevorrichtung durchgeführt wird.

Untersuchungen der Anmelderin haben jedoch ergeben, dass eine besondere Erhöhung der Stabilität und Erhöhung der Fahrgeschwindigkeit bei Bearbeitung der Pflanzen ermöglicht wird, indem eine Detektion einer Bodenunebenheit, die bei Überfahren zu einer seitlichen Kippbewegung des Fahrzeugs führt, durchgeführt wird.

Eine typische Bodenunebenheit stellt ein Schlagloch, beispielsweise ein Schlagloch im Boden einer Weinrebenzeile dar. Schon bei Fahrgeschwindigkeiten ab 10 km/h erfolgt die Kippbewegung des Fahrzeugs bei Durchfahren des Schlaglochs typischerweise derart schnell, dass selbst bei zügiger Detektion der Verkippung eine Gegenbewegung nicht schnell genug durchführbar ist. Dies ist darin begründet, dass zwischen der Abgabe von Steuersignalen zur Steuerung der Haltevorrichtung und Durchführung der Bewegung der Haltevorrichtung, die zu einer Bewegung der Maschine an die Medianebene des Fahrzeugs heran und/oder von dieser wegführt, Verzugszeiten bestehen. Diese Verzugszeiten sind beispielsweise bei auf Ölhydraulik basierenden Systemen durch Ansprechzeiten der Hydraulikventile und/oder Ansprechzeiten zum Aufbauen des notwendigen Öldrucks in den entsprechenden Öldruckzylindern bedingt. Auch andere Antriebe wie Hydraulikmotoren oder elektrische Antriebe weisen aufgrund der hohen zu bewegenden Massen entsprechende Verzögerungen auf.

Vorzugsweise ist das erfindungsgemäße Verfahren daher derart ausgebildet, dass eine Bodenunebenheit, die bei Überfahren zu einer seitlichen Kippbewegung des Fahrzeugs führt, detektiert wird. Hierdurch wird ermöglicht, dass die Bodenunebeneinheit detektiert wird, bevor die Kippbewegung des Fahrzeugs aufgrund des Durchfahrens der Bodenunebenheit erfolgt, so dass eine entsprechende Steuerung der Haltevorrichtung eingeleitet werden kann, bevor die eigentliche Kippbewegung des Fahrzeugs erfolgt und hierdurch etwaige Verzugszeiten zwischen Abgabe der Steuersignale zur Steuerung der Haltevorrichtung und tatsächlich ausgeführter Bewegung der Maschine somit kompensiert werden.

Vorzugsweise erfolgt mittels der Detektionseinheit eine Abtastung des Bodens hinsichtlich Höhenänderungen in Fahrtrichtung vor mindestens einem Rad des Fahrzeugs. Die Detektion ergibt somit vorausschauend eine Höhenänderung, die bei anschließendem Durchfahren dieser Höhenänderung durch das Rad des Fahrzeugs zu einer Kippbewegung des Fahrzeugs führt. Insbesondere ist es vorteilhaft, dass mittels der Steuereinheit eine Vorausberechnung der zu erwartenden seitlichen Kippbewegung des Fahrzeugs aufgrund der Bodenunebenheit abhängig von den durch die Abtastung ermittelten Daten erfolgt. Die Vorausberechnung erfolgt zumindest hinsichtlich der Kipprichtung der seitlichen Kippbewegung des Fahrzeugs. Vorzugsweise erfolgt die Vorausberechung sowohl hinsichtlich der Kipprichtung, als auch hinsichtlich des zu erwartenden Kippwinkels des Fahrzeugs aufgrund der Bodenunebenheit.

In dieser vorzugsweisen Ausführungsform ist somit eine Vorhersage einer Kippbewegung des Fahrzeugs aufgrund einer Bodenunebenheit möglich und die entsprechende Gegenbewegung kann bereits eingeleitet werden, bevor die eigentliche Kippbewegung stattfindet.

Entsprechend umfasst die Detektionseinheit der erfindungsgemäßen Steuervorrichtung in einer vorzugsweisen Ausführungsform eine Abtasteinheit zum Abtasten des Bodens hinsichtlich Höhenänderungen in Fahrtrichtung von mindestens einem Rad des Fahrzeugs. Insbesondere ist die Steuereinheit vorzugsweise ausgebildet zur Vorausberechnung der seitlichen Kippbewegung des Fahrzeugs abhängig von den durch die Abtastung ermittelten Daten. Hierdurch ergeben sich die vorgenannten Vorteile.

Bei der Vorausberechnung der seitlichen Kippbewegung wird vorzugsweise der Abstand zwischen dem Detektionsort der Bodenunebenheit und dem Rad des Fahrzeugs sowie die Geschwindigkeit des Fahrzeugs berücksichtigt, so dass die Zeit zwischen Detektion der Bodenunebenheit und Durchfahren der Bodenunebenheit durch das Rad des Fahrzeugs berechnet wird und das Einleiten der Gegenbewegung derart erfolgt, dass die Gegenbewegung synchron mit Durchfahren der Bodenunebenheit durch das Rad des Fahrzeugs erfolgt.

Typischerweise weist ein Fahrzeug zumindest zwei in Fahrtrichtung nebeneinander angeordnete Räder auf, wie beispielsweise die beiden Hinterräder eines Traktors. Vorzugsweise erfolgt die Abtastung des Bodens hinsichtlich Höhenänderungen in Fahrtrichtung zumindest in Fahrtrichtung vor zwei nebeneinander angeordneten Rädern des Fahrzeugs. Hierdurch können Bodenunebenheiten, welche bei Durchfahren zu Kippbewegungen in Fahrtrichtung nach rechts oder nach links führen, detektiert werden. Typische zur Pflanzenbearbeitung eingesetzte Fahrzeuge weisen zumindest eine starre und eine pendelnd aufgehängte Achse, wie nachfolgend beschrieben, auf. Da die Räder der starren Achse maßgeblich für die Stabilität des Fahrzeugs und damit auch die Kippbewegung bei Durchfahren einer Bodenunebenheit sind, erfolgt vorzugsweise die Abtastung des Bodens hinsichtlich Höhenänderungen in Fahrtrichtung zumindest in Fahrtrichtung vor zwei nebeneinander angeordneten Rädern einer starren Achse des Fahrzeugs. Typischerweise ist die Hinterachse eines Fahrzeugs als starre Achse ausgebildet. Vorzugsweise erfolgt daher die Abtastung des Bodens hinsichtlich Höhenänderungen in Fahrtrichtung zumindest vor den Hinterrädern des Fahrzeugs.

In einer vorzugsweisen Ausführungsform des erfindungsgemäßen Verfahrens erfolgt die Abtastung des Bodens mittels mindestens eines auf den Boden rollenden Abtastrades, welches zumindest hinsichtlich der Höhenposition beweglich relativ zu dem Fahrzeug und/oder der Haltevorrichtung gelagert ist. Entsprechend weist die Abtasteinheit der erfindungsgemäßen Steuervorrichtung vorzugsweise mindestens ein auf den Boden rollendes Abtastrad auf, welches zumindest hinsichtlich der Höhenposition beweglich relativ zu dem Fahrzeug und/oder der Haltevorrichtung gelagert ist. Hierdurch ist in einfacher Weise eine Detektion einer Bodenunebenheit zumindest hinsichtlich der Höhenänderung der Bodenunebenheit in technisch unaufwändiger Weise gegeben.

Insbesondere ist es vorteilhaft, dass bei dem erfindungsgemäßen Verfahren die Abtastung mittels mindestens zweier auf dem Boden rollender Räder erfolgt, welche relativ zu dem Fahrzeug quer zur Fahrtrichtung hinsichtlich ihrer bei Geradeausfahrt gemeinsamen, gegebenenfalls gedachten Drehachse pendelnd aufgehängt sind, indem die Lage der gemeinsamen Drehachse mittels der Detektionseinheit bestimmt wird.

Die beiden Räder sind somit in Fahrtrichtung seitlich nebeneinander angeordnet und weisen zumindest bei Geradeausfahrt eine gemeinsame Drehachse auf. Der Begriff "gemeinsame Drehachse" bezeichnet hierbei sowohl eine gegenständliche, als auch eine lediglich gedachte gemeinsame Drehachse: Typischerweise existiert bei heutigen Fahrzeugen, insbesondere bei den Vorderrädern, keine gegenständliche gemeinsame Drehachse. Dennoch wird in der Fahrzeugtechnik auch bei Einzelradaufhängung bei Vorliegen einer bei Geradeausfahrt gemeinsamen gedachten Drehachse von einer gemeinsamen Drehachse oder gemeinsamen Achse solcher seitlich nebeneinander angeordneter, Räder gesprochen. Die pendelnde Aufhängung bedeutet hierbei, dass die beiden Räder derart beweglich sind, dass eine Drehbewegung der gemeinsamen Drehachse um eine parallel zur Fahrtrichtung stehende Achse erfolgt, so dass ein "Pendeln" der gemeinsamen Drehachse der beiden Räder relativ zu dem Fahrzeug möglich ist.

Diese vorzugsweise Ausführungsform des erfindungsgemäßen Verfahrens weist den Vorteil auf, dass in einfacher Weise die Höhenänderung eines Rades gegenüber dem anderen Rad detektiert wird, indem die Lage der gemeinsamen Drehachse bestimmt wird. Dies hat den Hintergrund, dass eine Kippbewegung des Fahrzeugs im Regelfall durch solche Bodenunebenheiten hervorgerufen wird, die lediglich ein oder mehrere Räder des Fahrzeugs auf einer Seite betreffen bzw. eine Höhenänderung der Räder einer Seite des Fahrzeugs gegenüber der Räder der anderen Seite des Fahrzeugs bewirken. Solche Bodenunebeneinheiten werden zuverlässig und in einfacher, unaufwändiger Weise durch die vorgenannte vorzugsweise Ausführungsform detektiert.

Entsprechend umfasst die Abtasteinheit der erfindungsgemäßen Steuervorrichtung vorzugsweise einen Lagesensor zur Bestimmung mindestens zweier auf dem Boden rollender Räder, die hinsichtlich einer bei Geradeausfahrt gemeinsamen, gegebenenfalls gedachten Drehachse pendelnd aufgehängt sind. Hieraus ergeben sich die vorgenannten Vorteile.

Bei der vorgenannten vorzugsweisen Ausführungsform ergibt sich insbesondere der Vorteil, dass typische Fahrzeuge, welche bei der Bearbeitung von Pflanzen Verwendung finden, bereits eine pendelnd aufgehängte Vorderachse besitzen. Insbesondere bei Traktoren ist es üblich, dass die Vorderachse (bzw. die gedachte Vorderachse aufgrund der Einzelradaufhängung der Vorderräder) pendelnd aufgehängt ist, im Gegensatz zur Hinterachse des Traktors. Dies hat zur Folge, dass das Durchfahren einer Bodenunebenheit mit den Rädern der Vorderachse lediglich zu einer Verkippung der Vorderachse gegenüber dem Traktor, nicht jedoch oder nur in geringem Umfang zu einer Verkippung des Traktors abgesehen von der Vorderachse führt. Erst bei Durchfahren der Bodenunebenheit mit den Rädern der Hinterachse erfolgt die seitliche Kippbewegung des Fahrzeugs. Es ist somit durch Detektion der Lage der Vorderachse bei solchen Fahrzeugen und insbesondere bei Traktoren in einfacher Weise möglich, vorausschauend eine seitliche Kippbewegung durch Detektion der Lage der pendelnd aufgehängten Vorderachse zu bestimmen.

Vorzugsweise ist bei dem erfindungsgemäßen Verfahren und bei der erfindungsgemäßen Steuervorrichtung daher die gemeinsame Drehachse der beiden Räder eine pendelnd aufgehängte Vorderachse des Fahrzeugs.

Vorzugsweise sind die zwei vorgenannten auf dem Boden rollenden Räder derart seitlich nebeneinander angeordnet, dass jedes der beiden Räder jeweils in einer Fahrspur des Fahrzeugs abrollt.

In einer weiteren vorzugsweisen Ausführungsform des erfindungsgemäßen Verfahrens wird mittels der Detektionseinheit die relative Verkippung der gemeinsamen Drehachse senkrecht zur Fahrtrichtung gegenüber dem Fahrzeug bestimmt. Insbesondere ist es vorteilhaft, dass die relative Verkippung senkrecht zur Fahrtrichtung gegenüber dem Fahrzeug bestimmt wird, indem ein Detektor aus der Gruppe Hall-Geber, Potentiometer, induktiver Messvorrichtung oder Wegaufnehmer verwendet wird. Ebenso liegt die Verwendung mehrerer unterschiedlicher und/oder gleicher Detektoren zur Erhebung redundanter Messdaten im Rahmen der Erfindung.

Entsprechend ist der Lagesensor der erfindungsgemäßen Steuervorrichtung vorzugsweise ausgebildet zur Bestimmung der relativen Verkippung zwischen der gemeinsamen Drehachse und Fahrzeug senkrecht zur Fahrtrichtung. Vorzugsweise ist der Lagesensor als Sensor aus der Gruppe Hall-Geber, Potentiometer, induktive Messvorrichtung oder Wegaufnehmer ausgebildet. Ebenso liegt die Verwendung mehrerer gleicher und/oder unterschiedlicher Lagesensoren zur redundanten Messdatenerfassung im Rahmen der Erfindung.

Die Bestimmung der relativen Verkippung zwischen gemeinsamer Drehachse und Fahrzeug, beispielsweise des Winkels zwischen gemeinsamer Drehachse und Medianebene des Fahrzeugs ist in besonders einfacher technischer unaufwendiger Weise realisierbar.

In einer weiteren vorzugsweisen Ausführungsform des erfindungsgemäßen Verfahrens wird mittels der Detektionseinheit die absolute Verkippung der gemeinsamen Drehachse senkrecht zur Fahrtrichtung gegenüber der Horizontalen bestimmt. Vorzugsweise erfolgt die Detektion mittels eines Detektors aus der Gruppe Beschleunigungsaufnehmer, Gyroskop oder Satellitenpositionierungssystem. Ebenso liegt die Verwendung mehrerer gleicher und/oder unterschiedlicher Detektoren zur Erhebung redundanter Messdaten im Rahmen der Erfindung. Die Bestimmung der absoluten Lage weist den Vorteil auf, dass hochgenaue Daten hinsichtlich der zu erwartenden Kippbewegung des Fahrzeugs vorliegen und somit eine genauere Steuerung der Gegenbewegung verglichen mit der Messung der relativen Verkippung möglich ist.

Entsprechend ist der Lagesensor der erfindungsgemäßen Steuervorrichtung vorzugsweise ausgebildet zur Bestimmung der absoluten Verkippung der gemeinsamen Drehachse senkrecht zur Fahrtrichtung gegenüber der Horizontalen, wobei der Lagesensor vorzugsweise ein Sensor aus der Gruppe Beschleunigungsaufnehmer, Gyroskop oder Satellitenpositionierungssystem ist. Ebenso liegt die Verwendung mehrerer gleicher und/oder unterschiedlicher Lagesensoren zur redundanten Messdatenerfassung im Rahmen der Erfindung.

Insbesondere ist es vorteilhaft, die Lage der gemeinsamen Drehachse sowohl relativ als auch absolut zu bestimmen. Typischerweise ist die Bestimmung der relativen Verkippung zwischen gemeinsamer Drehachse und Fahrzeug schneller gegenüber der Bestimmung der absoluten Lage der gemeinsamen Drehachse möglich, wohingegen die Bestimmung der absoluten Lage der gemeinsamen Drehachse eine genauere Vorausberechnung der zu erwartenden Kippbewegung des Fahrzeugs ermöglicht. In einer vorzugsweisen Ausführungsform des erfindungsgemäßen Verfahrens erfolgt somit zunächst eine Vorausberechnung der zu erwartenden Kippbewegung anhand der Messung der relativen Verkippung der gemeinsamen Drehachse zu dem Fahrzeug und anschließend ein Abgleich bzw. eine Korrektur dieser Vorausberechnung anhand der gemessenen absoluten Lage der gemeinsamen Drehachse.

In einer weiteren vorzugsweisen Ausführungsform des erfindungsgemäßen Verfahrens erfolgt die Abtastung des Bodens berührungslos. Vorzugsweise erfolgt die Abtastung mittels Ultraschall, Radar oder einer Laserabtastung. Ebenso liegt die Verwendung mehrerer gleicher und/oder unterschiedlicher Abtastmethoden zur redundanten Datenerhebung im Rahmen der Erfindung. Entsprechend ist die Abtasteinheit der Steuervorrichtung vorzugsweise ausgebildet zur berührungslosen Abtastung des Bodens und ist insbesondere vorzugsweise als Ultraschallabtasteinheit, Radarabtasteinheit oder Laserabtasteinheit ausgebildet. Ebenso liegt die Verwendung mehrerer gleicher und/oder unterschiedlicher Abtasteinheiten zur Erhebung redundanter Messdaten im Rahmen der Erfindung.

Die berührungslose Abtastung ist insbesondere bei Fahrzeugen vorteilhaft, die keine pendelnd aufgehängte Vorderachse aufweisen, da hier in einfacher Weise eine Abtasteinheit an die Haltevorrichtung angeordnet werden kann, welche die erforderlichen Daten über die Bodenunebenheiten in Fahrtrichtung vor dem Fahrzeug ermittelt.

Die erfindungsgemäße Steuervorrichtung ist vorzugsweise zur Durchführung des erfindungsgemäßen Verfahrens bzw. einer vorzugsweisen Ausführungsform hiervon geeignet ausgebildet.

Die eingangs genannte Aufgabe ist weiterhin durch eine erfindungsgemäße Haltevorrichtung gemäß Anspruch 18 gelöst. Die erfindungsgemäße Haltevorrichtung für eine Maschine zur Pflanzenbearbeitung ist an ein Fahrzeug anordbar, umfasst eine Steuervorrichtung und ist derart ausgebildet, dass bei an dem Fahrzeug angeordneter Haltevorrichtung abhängig von Steuersignalen der Steuervorrichtung eine an die Haltevorrichtung angebrachte Maschine mittels der Haltevorrichtung zu einer Medianebene des Fahrzeugs hin- und von dieser wegbewegbar ist. Wesentlich ist, dass die Steuervorrichtung der Haltevorrichtung gemäß einer erfindungsgemäßen Steuervorrichtung bzw. einer vorzugsweisen Ausführungsform hiervon ausgebildet ist.

Hierbei liegt es im Rahmen der Erfindung, dass die Haltevorrichtung in an sich bekannter Weise ausgebildet ist. Insbesondere ist eine Ausbildung der Haltevorrichtung gemäß EP 0 951 813 A1 vorteilhaft. Die Haltevorrichtung umfasst in dieser vorzugsweisen Ausführungsform ein Anbauelement zum Anbringen der Haltevorrichtung an dem Fahrzeug sowie einen Haltemast, der mittels aktiver Antriebe schwenkbar gegenüber der Haltevorrichtung gelagert ist. Weiterhin weist die Haltevorrichtung einen Tragarm auf, der ebenfalls mittels aktiver Antriebe schwenkbar an dem Haltemast angeordnet ist. Durch Verschwenken des Haltemastes kann in einfacher Weise eine Gegenbewegung zu einer seitlichen Kippbewegung des Fahrzeugs erzielt werden. Insbesondere ist es vorteilhaft, bei der Gegenbewegung den Haltemast um den gleichen Winkel entsprechend dem Kippwinkel des Fahrzeugs bei der seitlichen Kippbewegung, jedoch in entgegengesetzter Richtung zu bewegen.

Ebenso ist jedoch auch die Ausführung der Haltevorrichtung mit Linearführungen, beispielsweise analog zu DE 10 2007 019 185 A1 denkbar. In dieser vorzugsweisen Ausführungsform weist die Haltevorrichtung ebenfalls ein Anbauelement zum Anbringen der Haltevorrichtung an dem Fahrzeug auf, wobei ein Tragarm für die Maschine mittels aktiver Antriebe linear bewegbar relativ zu dem Anbauelement an diesem angeordnet ist. Durch die lineare Bewegung des Tragarms ist somit eine seitliche Verschiebung einer an dem Tragarm angeordneten Maschine relativ zu dem Fahrzeug möglich.

Die zuvor genannten aktiven Antriebe sind vorzugsweise wie bei Fahrzeugen zur Bearbeitung von Pflanzen üblich als hydraulische Antriebe, insbesondere als hydraulische Zylinder ausgebildet. Ebenso liegt die Verwendung von hydraulischen Motoren oder elektrischer Motoren im Rahmen der Erfindung.

Mit dem erfindungsgemäßen Verfahren und den erfindungsgemäßen Vorrichtungen wird somit eine seitliche Kippbewegung des Fahrzeuges bei Durchfahren einer Bodenunebenheit detektiert und die Haltevorrichtung entgegen der Kipprichtung bewegt. Diese Gegenbewegung erfolgt somit bei einer beliebigen seitlichen Kippbewegung, insbesondere somit bei Einfahrt des Fahrzeugs in eine Bodenunebenheit, ebenso gegebenenfalls bei Ausfahrt aus der Bodenunebenheit, sofern dies zu einer Kippbewegung führt.

Es liegt im Rahmen der Erfindung, dass die Detektionseinheit derart an dem Fahrzeug oder einem Bereich der Haltevorrichtung angebracht ist, dass die Detektionseinheit nicht mittels der Haltevorrichtung zu einer Medianebene des Fahrzeugs hin- und von dieser wegbewegbar ist, sondern gegenüber dieser Bewegung statisch an dem Fahrzeug oder der Haltevorrichtung angebracht ist. In diesem Fall erfolgt abhängig von den Signalen der Detektionseinheit eine Steuerung der Haltevorrichtung zum Vermeiden oder zumindest Verringern einer durch das seitliche Kippen des Fahrzeugs verursachten seitlichen Auslenkung der Maschine. Vorteilhaft ist es jedoch, die Detektionseinheit an der Maschine oder an einem Teil der Haltevorrichtung anzuordnen, welcher zu einer Medianebene des Fahrzeugs hin- und/oder von dieser wegbewegbar ist. In diesem Fall erfolgt vorzugsweise abhängig von den Signalen der Detektionseinheit eine Regelung derart, dass eine durch das seitliche Kippen des Fahrzeugs verursachte seitliche Auslenkung der Maschine vermieden oder zumindest verringert wird.

Für eine solche Regelung umfasst die Steuervorrichtung vorzugsweise einen Proportional/Differenzial-Regler oder einen Proportional/Integral/Differenzial-Regler. Solche Regler sind an sich bekannt. Untersuchungen des Anmelders haben gezeigt, dass insbesondere die Verwendung eines Proportional-Differential-Reglers eine ausreichende Genauigkeit bei gleichzeitig gegenüber anderen Reglern verringerten Kosten ermöglicht.

Vorzugsweise ist die Steuervorrichtung derart ausgebildet, dass aus den Signalen der Detektionseinheit der Kippwinkel und/oder die Kippgeschwindigkeit und/oder die Kipprichtung der Maschine ermittelt wird, vorzugsweise Kippwinkel und Kippgeschwindigkeit und Kipprichtung.

Bei der zuvor beschriebenen vorteilhaften Ausführungsform, bei der eine Bodenunebenheit mittels mindestens zweier auf dem Boden rollenden Räder erfolgt, insbesondere durch Detektion des Verkippen einer pendelnd aufgehängten gemeinsamen Drehachse der Räder bzw. gedachten gemeinsamen Drehachse ist es vorteilhaft, dass zusätzlich eine zweite Detektionseinheit, welche ein seitliches Kippen des Fahrzeugs und/oder der Maschine bzw. des sich mit der Maschine bewegenden Bereichs der Haltevorrichtung detektiert und die Steuerung der Haltevorrichtung abhängig von sowohl den Messdaten des Verkippens der gemeinsamen Drehachse als auch der zweiten Detektionseinheit erfolgt.

Untersuchungen des Anmelders ergaben, dass insbesondere bei heutigen Bearbeitungsvorgängen im Weinbau eine hohe Fahrgeschwindigkeit möglich und gewünscht ist, um den Bearbeitungsvorgang zu beschleunigen. Hierbei sind Fahrgeschwindigkeiten von 10 km/h und mehr typisch. Bei solchen Fahrgeschwindigkeiten muss jedoch aus den vorgenannten Gründen schnell auf eine Bodenunebenheit reagiert werden, um etwaige Verzögerungszeiten in der Steuerung, einem Hydrauliksystem oder anderen Antriebseinheiten zu kompensieren. Hierbei ist es vorteilhaft, aufgrund der mittels der beiden Räder vor Verkippen des Fahrzeugs detektieren Bodenunebenheit bereits eine Gegenbewegung einzuleiten und anschließend anhand der Messdaten der zweiten Detektionseinheit gegebenenfalls eine Korrektur zur exakteren Ausrichtung der Maschine bzw. exakteren Ermittlung einer entsprechenden Gegenbewegung durchzuführen.

Das erfindungsgemäße Verfahren und die erfindungsgemäße Steuervorrichtung sind insbesondere geeignet zur Verwendung einer Haltevorrichtung für den Weinbau, welche an einem Fahrzeug, wie beispielsweise einem Traktor derart angeordnet wird, dass ein Haltemast der Haltevorrichtung mit Drehachse parallel zur Fahrtrichtung nach rechts oder links verschwenkbar ist. Insbesondere ist es vorteilhaft, an diesem Haltemast einen Haltearm, welcher die Maschine trägt, anzuordnen, wobei der Haltearm ebenfalls gegenüber dem Haltemast mit einer Drehachse parallel zur Fahrtrichtung in beiden Drehrichtungen verschwenkbar ist.

In einer vorteilhaften Ausführungsform sind das erfindungsgemäße Verfahren und die erfindungsgemäße Steuerung ausgebildet, um bei solch einer Haltevorrichtung mit Haltemast und Haltearm eine an dem Haltearm angeordnete Maschine in einer vorgegebenen absoluten Sollausrichtung zu halten. Insbesondere ist es vorteilhaft, dass der Benutzer einen Neigungswinkel des Haltemastes und/oder des Haltearms als Sollwert vorgibt und diese Neidungswinkel gegenüber der horizontalen auch bei Durchfahren einer Bodenunebenheit durch entsprechende Ausgestaltung des vorgenannten Verfahrens bzw. der erfindungsgemäßen Steuervorrichtung eingehalten werden.

Weitere vorzugsweise Merkmale und vorzugsweise Ausführungsformen der Erfindung werden nachfolgend anhand der Figuren und einem Ausführungsbeispiel beschrieben. Dabei zeigt:
- Figur 1: eine aus dem Stand der Technik bekannte, an einem Fahrzeug angebrachte, Haltevorrichtung bei Durchfahren eines Schlaglochs;
- Figur 2: eine an einem Fahrzeug angebrachte erfindungsgemäße Haltevorrichtung vor Durchfahren des Schlaglochs;
- Figur 3: die Haltevorrichtung aus Figur 2 in der Situation, dass lediglich ein Rad eine pendelnd aufgehängte Vorderachse des Fahrzeugs in das Schlagloch eingefahren ist und
- Figur 4: die erfindungsgemäße Haltevorrichtung aus den Figuren 2 und 3 in der Situation, dass sowohl das Vorder- als auch ein Hinterrad des Fahrzeugs in das Startloch eingefahren sind.

Bei allen Figuren bezeichnen gleiche Bezugszeichen gleiche Elemente. Die Figuren stellen jeweils schematische Darstellungen einer Ansicht von vorne dar, die Fahrtrichtung des Fahrzeugs steht somit jeweils senkrecht zur Zeichenebene.

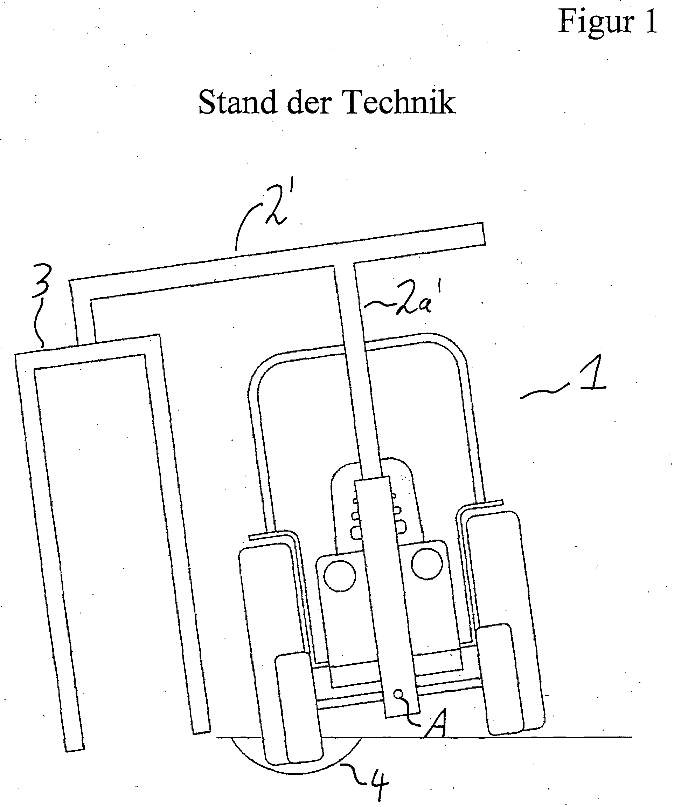

In Figur 1 ist der Stand der Technik dargestellt. An einem Fahrzeug 1, welches als Traktor ausgebildet ist, ist an der Vorderseite eine Haltevorrichtung 2' angeordnet. An die Haltevorrichtung 2' ist wiederum eine Maschine 3, welche als Laubschneider für Weinrebenzeilen ausgebildet ist, angeordnet. Die Haltevorrichtung 2' ist über eine nicht dargestellte Halterung um eine Schwenkachse A, welche parallel zur Fahrtrichtung des Fahrzeugs 1 liegt, schwenkbar mit dem Fahrzeug 1 verbunden. Ein Mast 2a' der Haltevorrichtung 2' ist hierbei mittels hydraulischer Zylinder relativ zu dem Fahrzeug 1 um die Achse a nach rechts und links schwenkbar.

Bei der Pflanzenbearbeitung fährt das Fahrzeug 1 zwischen Weinrebenzeilen hindurch und mittels der Maschine 3 erfolgt ein Schneiden des Laubes der Weinrebenzeilen, welche sich mittig durch die Maschine 3 hindurchbewegen, so dass gleichzeitig eine Beschneidung an der rechten und linken Seite der Weinrebenzeile erfolgt.

Fährt nun das Fahrzeug 1 in eine Bodenunebenheit 4, so dass lediglich die in Figur 1 links liegenden Räder des Fahrzeugs 1 eine Höhenveränderung gegenüber der Horizontalen erfahren, so kippt das Fahrzeug 1 und damit auch die Haltevorrichtung 2' mit Mast 2 a' und Maschine 3 seitlich in Fahrtrichtung nach rechts und vollführt somit eine Drehung in Fahrtrichtung gesehen im Uhrzeigersinn.

Durch diese Kippbewegung wird einerseits die Stabilität des Traktors beeinträchtigt, da aufgrund der beschleunigten Massen, insbesondere der Maschine 3 die Gefahr besteht, dass das Fahrzeug 1 umkippt. Darüber hinaus entsprechen die Positionierung und die Ausrichtung der Maschine 3 nicht mehr der Form einer Weinrebenzeile, so dass eine Beschädigung der Pflanzen und/oder der Maschine riskiert wird.

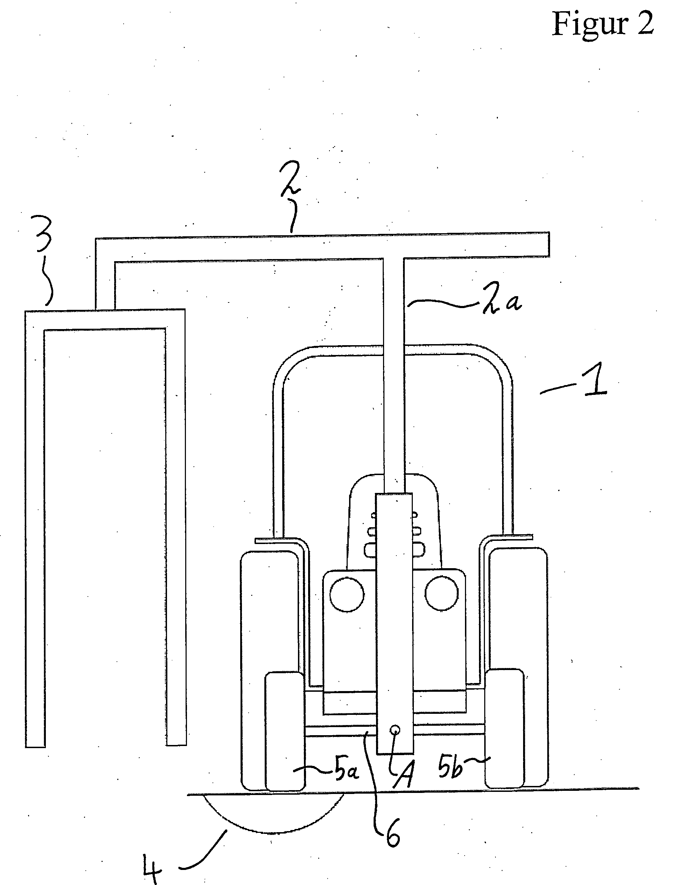

Die in Figur 2 dargestellte erfindungsgemäße Haltevorrichtung 2 umfasst einen Mast 2a und weist eine nicht dargestellte Steuervorrichtung auf, welche eine Detektionseinheit mit einer Abtasteinheit umfasst, wobei die Abtasteinheit einen Lagesensor aufweist.

Die Vorderachse des Fahrzeugs 1 ist pendelnd aufgehängt. Zwar weist das Fahrzeug 1 keine gegenständliche Vorderachse, welche die beiden Vorderräder 5a und 5b verbinden würde, auf. Die Bezeichnung "pendelnd aufgehängte Vorderachse" ist derart zu verstehen, dass die (gedachte) gemeinsame Drehachse 6 der Vorderräder 5a und 5b bei Durchfahren einer Bodenunebenheit um eine parallel zur Fahrtrichtung liegende Achse gegenüber dem restlichen Fahrzeug 1 drehbar ist.

Bei Geradeausfahrt auf ebenem Boden, wie in Figur 2 dargestellt, befinden sich sämtliche Räder des Fahrzeugs 1 senkrecht zur Horizontalen und die gemeinsame Drehachse 6 verläuft parallel zur Horizontalen.

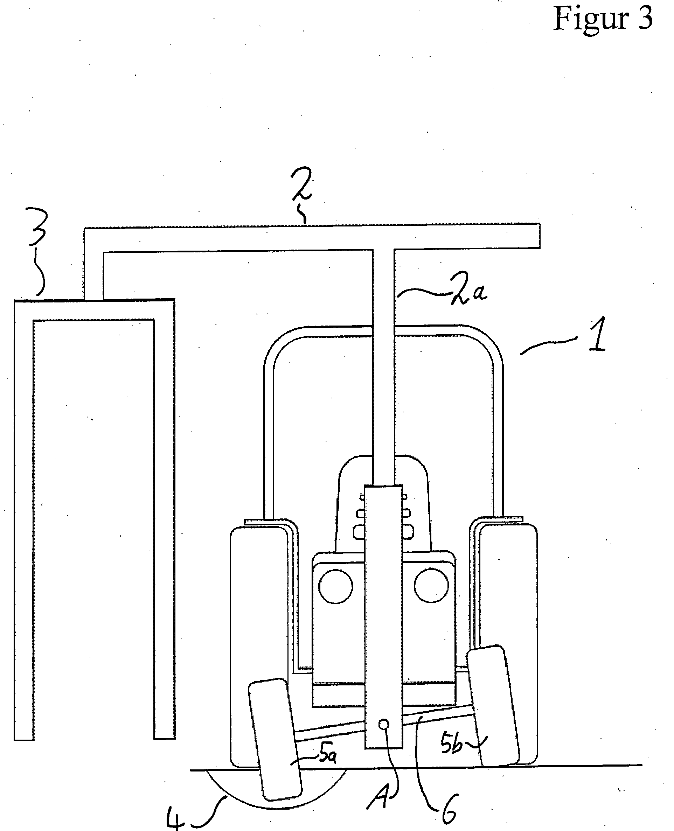

Ein Durchfahren der Bodenunebenheit 4 bewirkt zunächst, dass wie in Figur 3 dargestellt, das rechte Vorderrad 5a in die Bodenunebeneinheit 4 eintaucht, wohingegen das linke Vorderrad 5b auf der Horizontalen verbleibt. Da die gemeinsame Drehachse 6 der Vorderräder 5a und 5b pendelnd aufgehängt ist, führt dies lediglich zu einer Drehung der gemeinsamen Drehachse 6 relativ zu dem restlichen Fahrzeug 1 um eine Achse, welche parallel zur Fahrtrichtung ist. Es erfolgt jedoch kein seitliches Verkippen des Fahrzeug 1, das dieses durch die Hinterräder, welche noch nicht in die Bodenunebenheit 4 eingefahren sind, stabilisiert wird.

Der Lagesensor der Steuervorrichtung der erfindungsgemäßen Haltevorrichtung 2 erfasst den Winkel zwischen gemeinsamer Drehachse 6 und Fahrzeug 1. In der Steuervorrichtung der erfindungsgemäßen Haltevorrichtung 2 sind die Verzögerungszeiten zwischen Signalabgabe und Durchführung einer Schwenkbewegung des Mastes 2a der Haltevorrichtung 2 hinterlegt. Darüber hinaus ist die Steuervorrichtung 2 mit der Geschwindigkeitsmessanlage des Fahrzeugs 1 verbunden und liest ständig die aktuelle Fahrgeschwindigkeit aus.

Weiterhin ist die Entfernung zwischen Vorder- und Hinterachse des Fahrzeugs 1 in der Steuervorrichtung hinterlegt, so dass aus diesen Daten die Zeitdauer zwischen Verkippung der gemeinsamen Drehachse und Einfahren der Hinterräder in die Bodenunebenheit 4 ermittelt wird. Nach Abzug der hinterlegten Verzögerung zwischen Absendung eines Steuersignals und Durchführung einer Schwenkbewegung mittels der Haltevorrichtung 2 wird somit der Zeitpunkt ermittelt, an dem die Steuervorrichtung die Schwenkbewegung einleitet.

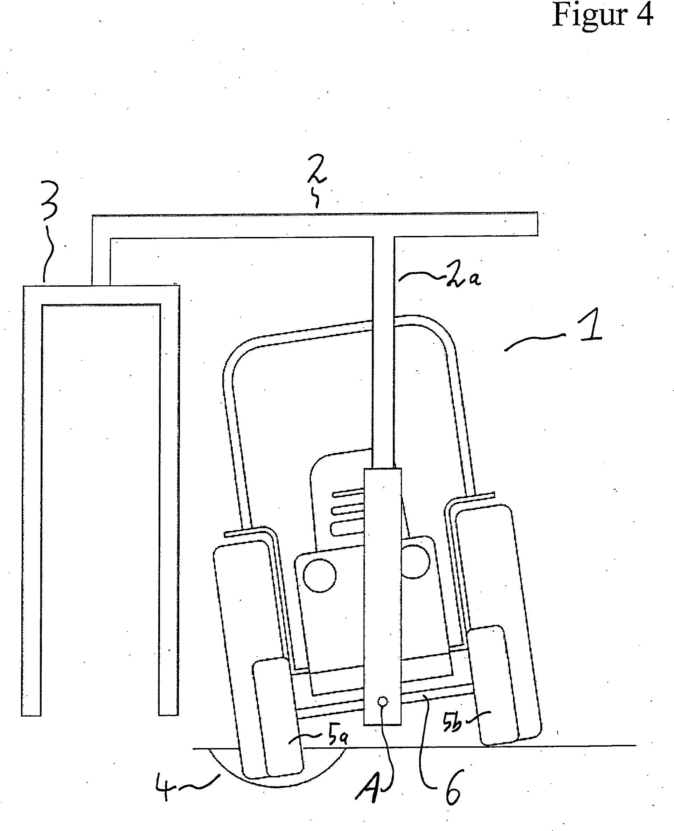

Das Ergebnis ist in Figur 4 dargestellt. In dieser Situation ist sowohl das rechte Vorder- als auch das rechte Hinterrad des Fahrzeugs 1 in die Bodenunebenheit 4 eingefahren und das Fahrzeug 1 entsprechend in Fahrtrichtung seitlich nach rechts verkippt. Aufgrund der durch die Steuervorrichtung automatisch eingeleitenden Schwenkbewegung des Mastes 2a der Haltevorrichtung 2 befindet sich der Mast 2a jedoch nach wie vor senkrecht zur Horizontalen. Insbesondere führte die Maschine 3 keine Kippbewegung gegenüber der Horizontalen aus.

Die Steuerung erfolgte dabei derart, dass der Mast 2a um den gleichen Winkel verschwenkt wird, welcher als Verkippungswinkel zwischen gemeinsamer Drehachse 6 und Fahrzeug 1 in der in Figur 3 dargestellten Situation ermittelt wurde, allerdings in entgegengesetzter Schwenkrichtung.

Wie in Figur 4 ersichtlich, kann mit der erfindungsgemäßen Haltevorrichtung somit eine seitliche Kippbewegung des Fahrzeugs 1 bei Durchfahren einer Bodenunebeneinheit 4 kompensiert werden, wobei in diesem Fall die Maschine 3 an die Medianebene des Fahrzeugs 1 hinbewegt wurde.

## Patentansprüche

1. Verfahren zur Steuerung einer an einer Vorderseite eines Fahrzeugs (1) anordbaren Haltevorrichtung (2) für eine Maschine (3) zur Bearbeitung zeilenartig angeordneter Pflanzen,
wobei die Steuerung derart erfolgt, dass bei an dem Fahrzeug (1) angeordneter Haltevorrichtung (2), die einen Mast (2a) aufweist und an der Haltevorrichtung (2) angeordneter Maschine (3) die Maschine (3) mittels der Haltevorrichtung (2) zu einer Medianebene des Fahrzeugs hin- und/oder von dieser wegbewegt wird, wobei
eine aufgrund des Fahrens über Bodenunebenheiten verursachte seitliche Kippbewegung des Fahrzeugs und/oder eine Bodenunebenheit, die bei Überfahren zu einer seitlichen Kippbewegung des Fahrzeugs führt,
mittels einer Steuereinrichtung, welche eine Detektionseinheit umfasst, zumindest hinsichtlich der Kipprichtung detektiert wird und eine Schwenkbewegung des Mastes (2a) mittels der Steuervorrichtung automatisch derart gesteuert wird, dass abhängig von der detektierten Kippbewegung und/oder Bodenunebenheit (4) die Maschine (3) entgegen der Kipprichtung des Fahrzeugs an die Medianebene hin- und/oder von dieser wegbewegt wird, so dass eine durch das seitliche Kippen des Fahrzeugs verursachte seitliche Auslenkung der Maschine (3) vermieden oder zumindest verringert wird.

2. Verfahren nach Anspruch 1,
**dadurch gekennzeichnet,**
**dass** eine Bodenunebenheit, die bei Überfahren zur einer seitlichen Kippbewegung des Fahrzeugs führt, detektiert wird,
indem mittels der Detektionseinheit eine Abtastung des Bodens hinsichtlich Höhenänderungen in Fahrtrichtung vor mindestens einem Rad des Fahrzeugs erfolgt, insbesondere,
**dass** mittels der Steuereinheit eine Vorausberechnung der zu erwartenden seitlichen Kippbewegung des Fahrzeugs aufgrund der Bodenunebenheit (4) abhängig von den durch die Abtastung ermittelten Daten erfolgt.

3. Verfahren nach Anspruch 2,
**dadurch gekennzeichnet,**
**dass** die Abtastung des Bodens mittels mindestens eines auf dem Boden rollenden Abtastrades erfolgt, welches zumindest hinsichtlich der Höhenposition beweglich relativ zu dem Fahrzeug (1) und/oder der Haltevorrichtung (2) gelagert ist.

4. Verfahren nach Anspruch 3,
**dadurch gekennzeichnet,**
**dass** die Abtastung mittels mindestens zweier auf dem Boden rollender Räder (5a, 5b) erfolgt, welche relativ zu dem Fahrzeug (1) quer zur Fahrtrichtung hinsichtlich ihrer bei Geradeausfahrt gemeinsamen, gegebenenfalls gedachten Drehachse pendelnd aufgehängt sind, indem die Lage der gemeinsamen Drehachse mittels der Detektionseinheit bestimmt wird.

5. Verfahren nach Anspruch 4,
**dadurch gekennzeichnet,**
**dass** mittels der Detektionseinheit die absolute Verkippung der gemeinsamen Drehachse senkrecht zur Fahrtrichtung gegenüber der Horizontalen bestimmt wird, vorzugsweise mittels eines Beschleunigungsaufnehmers und/oder eines Gyroskops und/oder eines Satellitenpositionierungssystems.

6. Verfahren nach Anspruch 4,
**dadurch gekennzeichnet,**
**dass** mittels der Detektionseinheit die relative Verkippung der gemeinsamen Drehachse senkrecht zur Fahrtrichtung gegenüber dem Fahrzeug (1) bestimmt wird, vorzugsweise mittels eines Hall-Gebers und/oder eines Potentiometers und/oder einer induktiven Messvorrichtung und/oder eines Wegaufnehmers.

7. Verfahren nach einem der Ansprüche 4 bis 6,
**dadurch gekennzeichnet,**
**dass** die gemeinsamen Drehachse eine pendelnd aufgehängte Vorderachse des Fahrzeugs ist.

8. Verfahren nach eine Anspruch 2,
**dadurch gekennzeichnet,**
**dass** die Abtastung des Bodens berührungslos erfolgt, vorzugsweise mittels Ultraschall und/oder Radar und/oder Laserabtastung.

9. Steuervorrichtung zur Steuerung einer an einer Vorderseite eines Fahrzeugs (1) anordbaren Haltevorrichtung (2) für eine Maschine (3) zur Bearbeitung zeilenartig angeordneter Pflanzen,
wobei die Steuervorrichtung ausgebildet ist zur Steuerung der Haltevorrichtung (2), die einen Mast aufweist, derart, dass bei an dem Fahrzeug (1) angeordneter Haltevorrichtung (2) abhängig von Steuersignalen der Steuervorrichtung die an die Haltevorrichtung (2) angebrachte Maschine (3) mittels der Haltevorrichtung (2) zu einer Medianebene des Fahrzeugs hin- und/oder von dieser wegbewegbar ist, wobei
die Steuervorrichtung eine Detektionseinheit umfasst und derart ausgebildet ist,
dass eine aufgrund des Fahrens über Bodenunebenheiten verursachte seitliche Kippbewegung des Fahrzeugs und/oder eine Bodenunebenheit, die bei Überfahren zu einer seitlichen Kippbewegung des Fahrzeugs führt, detektierbar ist und eine Schwenkbewegung des Mastes (2a) mittels der Steuervorrichtung automatisch derart steuerbar ist, dass abhängig von einer detektierten seitlichen Kippbewegung und/oder Bodenunebenheit (4) die Maschine (3) entgegen der Kipprichtung des Fahrzeugs an die Medianebene hin- und/oder von dieser wegbewegbar ist, so dass eine durch das seitliche Kippen des Fahrzeugs verursachte seitliche Auslenkung der Maschine (3) vermieden oder zumindest verringert wird.

10. Steuervorrichtung nach Anspruch 9,
**dadurch gekennzeichnet,**
**dass** die Detektionseinheit eine Abtasteinheit zum Abtasten des Bodens hinsichtlich Höhenänderungen in Fahrtrichtung vor mindestens einem Rad des Fahrzeugs umfasst, insbesondere,
**dass** die Steuereinheit ausgebildet ist zur Vorausberechnung der seitlichen Kippbewegung des Fahrzeugs abhängig von den durch die Abtastung ermittelten Daten.

11. Steuervorrichtung nach Anspruch 10,
**dadurch gekennzeichnet,**
**dass** die Abtasteinheit mindestens ein auf dem Boden rollendes Abtastrad umfasst,
welches zumindest hinsichtlich der Höhenposition beweglich relativ zu dem Fahrzeug (1) und/oder der Haltevorrichtung (2) gelagert ist.

12. Steuervorrichtung nach einem der Ansprüche 10 bis 11,
**dadurch gekennzeichnet,**
**dass** die Abtasteinheit einen Lagesensor zur Bestimmung der Verkippung mindestens zweier auf dem Boden rollender Räder (5a, 5b), die hinsichtlich einer bei Geradeausfahrt gemeinsamen, gegebenenfalls gedachten Drehachse pendelnd aufgehängt sind, umfasst.

13. Steuervorrichtung nach Anspruch 12,
**dadurch gekennzeichnet,**
**dass** der Lagesensor ausgebildet ist zur Bestimmung der absoluten Verkippung der gemeinsamen Drehachse senkrecht zur Fahrtrichtung gegenüber der Horizontalen, vorzugsweise, dass der Lagesensor einen Beschleunigungsaufnehmer und/oder ein Gyroskop und/oder ein Satellitenpositionierungssystem umfasst.

14. Steuervorrichtung nach Anspruch 12,
**dadurch gekennzeichnet,**
**dass** der Lagesensor ausgebildet ist zur Bestimmung der relativen Verkippung zwischen der gemeinsamen Drehachse und Fahrzeug (1) senkrecht zur Fahrtrichtung, vorzugsweise, dass der Lagesensor einen Hall-Geber und/oder ein Potentiometer und/oder eine induktive Messvorrichtung und/oder einen Wegaufnehmer umfasst.

15. Steuervorrichtung nach einem der Ansprüche 12 bis 14,
**dadurch gekennzeichnet,**
**dass** die gemeinsamen Drehachse eine pendelnd aufgehängte Achse, insbesondere eine Vorderachse des Fahrzeugs ist.

16. Steuervorrichtung nach Anspruch 10,
**dadurch gekennzeichnet,**
**dass** die Abtasteinheit ausgebildet ist zur berührungslosen Abtastung des Bodens, vorzugsweise, dass die Abtasteinheit eine Ultraschallabtasteinheit und/oder eine Radarabtasteinheit und/oder eine Laserabtasteinheit ist.

17. Steuervorrichtung nach einem der Ansprüche 9 bis 16,
**dadurch gekennzeichnet,**
**dass** die Steuervorrichtung zur Ausführung eines Verfahrens gemäß einem der Ansprüche 1 bis 8 ausgebildet ist.

18. Haltevorrichtung (2) für eine Maschine (3)zur Pflanzenbearbeitung, welche an ein Fahrzeug (1) anordbar ist, eine Steuervorrichtung umfasst und derart ausgebildet ist,
dass bei an dem Fahrzeug (1) angeordneter Haltevorrichtung (2) abhängig von Steuersignalen der Steuervorrichtung eine an die Haltevorrichtung (2) angebrachte Maschine (3) mittels der Haltevorrichtung (2) zu einer Medianebene des Fahrzeugs, hin- und von dieser wegbewegbar ist,
**dadurch gekennzeichnet,**
**dass** die Steuervorrichtung gemäß einem der Ansprüche 9 bis 17 ausgebildet ist.

## Claims

1. Method of controlling a holding device (2) for a machine (3) for processing plants arranged in lines, which holding device can be arranged on a front side of a vehicle (1),
wherein the control is effected in such a way that when the holding device (2), which has a mast (2a), is arranged on the vehicle (1) and the machine (3) is arranged on the holding device (2), the machine (3) is moved towards and/or away from a median plane of the vehicle by means of the holding device (2), wherein
a lateral tilting movement of the vehicle brought about by driving over uneven pieces of ground and/or an uneven piece of ground which, when driven over, results in a lateral tilting movement of the vehicle is detected, at least in respect of the direction of tilting, by means of a control device which comprises a detection unit, and a pivoting movement of the mast (2a) is automatically controlled by means of the control device in such a way that, in dependence upon the tilting movement and/or uneven piece of ground (4) that is detected, the machine (3) is moved towards and/or away from the median plane contrary to the direction of tilting of the vehicle, so that a lateral excursion of the machine (3) brought about by the lateral tilting of the vehicle is avoided or at least reduced.

2. Method according to claim 1,
**characterised in that**
an uneven piece of ground which, when driven over, results in a lateral tilting movement of the vehicle is detected by scanning of the ground, by means of the detection unit, in respect of changes in height in the direction of travel in front of at least one wheel of the vehicle, especially,
by means of the control unit, the expected lateral tilting movement of the vehicle as a result of the uneven ground (4) is predicted in dependence upon the data ascertained by the scanning.

3. Method according to claim 2,
**characterised in that**
the scanning of the ground is effected by means of at least one scanning wheel rolling on the ground, which scanning wheel is mounted so as to be movable, at least in respect of its height position, relative to the vehicle (1) and/or relative to the holding device (2).

4. Method according to claim 3,
**characterised in that**
the scanning is effected by means of at least two wheels (5a, 5b) rolling on the ground, which wheels are mounted so as to oscillate relative to the vehicle (1) transversely with respect to the direction of travel in respect of an axis which is their common, optionally notional rotational axis in the case of travel in a straight line, by determination of the position of the common rotational axis by means of the detection unit.

5. Method according to claim 4,
**characterised in that**
by means of the detection unit the absolute tilt of the common rotational axis perpendicular to the direction of travel with respect to the horizontal is determined, preferably by means of an acceleration sensor and/or a gyroscope and/or a satellite positioning system.

6. Method according to claim 4,
**characterised in that**
by means of the detection unit the relative tilt of the common rotational axis perpendicular to the direction of travel with respect to the vehicle (1) is determined, preferably by means of a Hall effect sensor and/or a potentiometer and/or an inductive measuring device and/or a displacement sensor.

7. Method according to any one of claims 4 to 6,
**characterised in that**
the common rotational axis is an oscillatingly mounted front axle of the vehicle.

8. Method according to claim 2,
**characterised in that**
the scanning of the ground is effected contactlessly, preferably by means of ultrasound and/or radar and/or laser scanning.

9. Control device for controlling a holding device (2) for a machine (3) for processing plants arranged in lines, which holding device can be arranged on a front side of a vehicle (1),
wherein the control device is configured for controlling the holding device (2), which has a mast, in such a way that when the holding device (2) is arranged on the vehicle (1), the machine (3) mounted on the holding device (2) is movable towards and/or away from a median plane of the vehicle by means of the holding device (2) in dependence upon control signals of the control device, wherein
the control device comprises a detection unit and is configured in such a way that
a lateral tilting movement of the vehicle brought about by driving over uneven pieces of ground and/or an uneven piece of ground which, when driven over, results in a lateral tilting movement of the vehicle is detectable and a pivoting movement of the mast (2a) is automatically controllable by means of the control device in such a way that, in dependence upon a lateral tilting movement and/or uneven piece of ground (4) that is detected, the machine (3) is movable towards and/or away from the median plane contrary to the direction of tilting of the vehicle, so that a lateral excursion of the machine (3) brought about by the lateral tilting of the vehicle is avoided or at least reduced.

10. Control device according to claim 9,
**characterised in that**
the detection unit comprises a scanning unit for scanning the ground in respect of changes in height in the direction of travel in front of at least one wheel of the vehicle, especially
the control unit is configured for predicting the lateral tilting movement of the vehicle in dependence upon the data ascertained by the scanning.

11. Control device according to claim 10,
**characterised in that**
the scanning unit comprises at least one scanning wheel rolling on the ground,
which scanning wheel is mounted so as to be movable, at least in respect of its height position, relative to the vehicle (1) and/or relative to the holding device (2).

12. Control device according to either one of claims 10 and 11,
**characterised in that**
the scanning unit comprises a position sensor for determining the tilt of at least two wheels (5a, 5b) rolling on the ground, which wheels are mounted so as to oscillate in respect of an axis which is a common, optionally notional rotational axis in the case of travel in a straight line.

13. Control device according to claim 12,
**characterised in that**
the position sensor is configured for determining the absolute tilt of the common rotational axis perpendicular to the direction of travel with respect to the horizontal; preferably the position sensor comprises an acceleration sensor and/or a gyroscope and/or a satellite positioning system.

14. Control device according to claim 12,
**characterised in that**
the position sensor is configured for determining the relative tilt between the common rotational axis and the vehicle (1) perpendicular to the direction of travel; preferably the position sensor comprises a Hall effect sensor and/or a potentiometer and/or an inductive measuring device and/or a displacement sensor.

15. Control device according to any one of claims 12 to 14,
**characterised in that**
the common rotational axis is an oscillatingly mounted axle, especially a front axle of the vehicle.

16. Control device according to claim 10,
**characterised in that**
the scanning unit is configured for contactless scanning of the ground; preferably the scanning unit is an ultrasound scanning unit and/or a radar scanning unit and/or a laser scanning unit.

17. Control device according to any one of claims 9 to 16,
**characterised in that**
the control device is configured for carrying out a method according to any one of claims 1 to 8.

18. Holding device (2) for a machine (3) for processing plants, which holding device can be arranged on a vehicle (1), comprises a control device and is configured in such a way that
when the holding device (2) is arranged on the vehicle (1), a machine (3) mounted on the holding device (2) is movable towards and away from a median plane of the vehicle by means of the holding device (2) in dependence upon control signals of the control device,
**characterised in that**
the control device is configured in accordance with any one of claims 9 to 17.

## Revendications

1. Procédé de commande d'un dispositif de maintien (2) pouvant être disposé sur un côté avant d'un véhicule (1) et destiné à maintenir une machine (3) de traitement de plantes disposées en lignes,
sachant que la commande s'effectue de telle sorte que, le dispositif de maintien (2) qui présente un mât (2a) étant disposé sur le véhicule (1) et la machine (3) étant disposée sur le dispositif de maintien (2), la machine (3) est, au moyen du dispositif de maintien (2), déplacée en direction d'un plan médian du véhicule et/ou en éloignement de ce plan, sachant qu'un mouvement de basculement latéral du véhicule produit en raison du passage sur des irrégularités du sol, et/ou une irrégularité du sol qui produit un mouvement de basculement latéral du véhicule passant dessus, est détecté(e), au moyen d'un organe de commande qui comprend une unité de détection, au moins en ce qui concerne la direction de basculement, et un mouvement de pivotement du mât (2a) est, au moyen du dispositif de commande, automatiquement commandé de telle sorte que, en fonction du mouvement de basculement et/ou de l'irrégularité du sol (4) détecté(e), la machine (3) est déplacée en direction du plan médian et/ou en éloignement de ce plan à l'encontre de la direction de basculement du véhicule, de sorte qu'une déviation latérale de la machine (3) produite par le basculement latéral du véhicule est évitée ou au moins diminuée.

2. Procédé selon la revendication 1, **caractérisé en ce qu'**une irrégularité du sol qui produit un mouvement de basculement latéral du véhicule passant dessus, est détectée par le fait qu'au moyen de l'unité de détection, on effectue une exploration du sol en ce qui concerne des modifications de hauteur dans la direction de marche devant au moins une roue du véhicule,
en particulier **en ce que**, au moyen de l'unité de commande, on effectue un calcul prévisionnel, en fonction des données déterminées par l'exploration, du mouvement de basculement latéral attendu du véhicule en raison de l'irrégularité du sol (4).

3. Procédé selon la revendication 2, **caractérisé en ce que** l'exploration du sol s'effectue au moyen d'au moins une roue d'exploration qui roule sur le sol et qui, au moins en ce qui concerne la position en hauteur, est montée à déplacement par rapport au véhicule (1) et/ou au dispositif de maintien (2).

4. Procédé selon la revendication 3, **caractérisé en ce que** l'exploration s'effectue au moyen de deux roues (5a, 5b) qui roulent sur le sol et qui, transversalement à la direction de marche relativement au véhicule (1), sont montées en suspension pendulaire en ce qui concerne leur axe de rotation commun éventuellement imaginaire lors de la marche en ligne droite, par le fait qu'on détermine au moyen de l'unité de détection la position de l'axe de rotation commun.

5. Procédé selon la revendication 4, **caractérisé en ce que**, au moyen de l'unité de détection, on détermine le basculement absolu de l'axe de rotation commun perpendiculairement à la direction de marche par rapport à l'horizontale, de préférence au moyen d'un capteur d'accélération et/ou d'un gyroscope et/ou d'un système de positionnement par satellite.

6. Procédé selon la revendication 4, **caractérisé en ce que**, au moyen de l'unité de détection, on détermine le basculement relatif de l'axe de rotation commun perpendiculairement à la direction de marche par rapport au véhicule (1), de préférence au moyen d'un capteur à effet Hall et/ou d'un potentiomètre et/ou d'un dispositif de mesure par induction et/ou d'un capteur de déplacement.

7. Procédé selon l'une des revendications 4 à 6, **caractérisé en ce que** l'axe de rotation commun est un essieu avant du véhicule monté en suspension pendulaire.

8. Procédé selon la revendication 2, **caractérisé en ce que** l'exploration du sol s'effectue sans contact, de préférence au moyen d'ultrasons et/ou d'un radar et/ou d'un balayage par faisceau laser.

9. Dispositif de commande pour la commande d'un dispositif de maintien (2) pouvant être disposé sur un côté avant d'un véhicule (1) et destiné à maintenir une machine (3) de traitement de plantes disposées en lignes,
sachant que le dispositif de commande est conçu pour commander le dispositif de maintien (2), qui présente un mât, de telle sorte que, le dispositif de maintien (2) étant disposé sur le véhicule (1), la machine (3) installée sur le dispositif de maintien (2) peut, en fonction de signaux de commande du dispositif de commande et au moyen du dispositif de maintien (2), être déplacée en direction d'un plan médian du véhicule et/ou en éloignement de ce plan,
sachant que le dispositif de commande comprend une unité de détection et est conçu de telle sorte qu'un mouvement de basculement latéral du véhicule produit en raison du passage sur des irrégularités du sol, et/ou une irrégularité du sol qui produit un mouvement de basculement latéral du véhicule passant dessus, peut être détecté(e), et un mouvement de pivotement du mât (2a) peut, au moyen du dispositif de commande, être automatiquement commandé de telle sorte que, en fonction d'un mouvement de basculement et/ou d'une irrégularité du sol (4) détecté(e), la machine (3) peut être déplacée en direction du plan médian et/ou en éloignement de ce plan à l'encontre de la direction de basculement du véhicule, de sorte qu'une déviation latérale de la machine (3) produite par le basculement latéral du véhicule est évitée ou au moins diminuée.

10. Dispositif de commande selon la revendication 9, **caractérisé en ce que** l'unité de détection comprend une unité d'exploration pour explorer le sol en ce qui concerne des modifications de hauteur dans la direction de marche devant au moins une roue du véhicule,
en particulier **en ce que** l'unité de commande est conçue pour effectuer un calcul prévisionnel du mouvement de basculement latéral du véhicule en fonction des données déterminées par l'exploration.

11. Dispositif de commande selon la revendication 10, **caractérisé en ce que** l'unité d'exploration comprend au moins une roue d'exploration qui roule sur le sol et qui, au moins en ce qui concerne la position en hauteur, est montée à déplacement par rapport au véhicule (1) et/ou au dispositif de maintien (2).

12. Dispositif de commande selon la revendication 10 ou 11, **caractérisé en ce que** l'unité d'exploration comprend un capteur de position pour déterminer le basculement d'au moins deux roues (5a, 5b) qui roulent sur le sol et qui sont montées en suspension pendulaire en ce qui concerne un axe de rotation commun éventuellement imaginaire lors de la marche en ligne droite.

13. Dispositif de commande selon la revendication 12, **caractérisé en ce que** le capteur de position est conçu pour déterminer le basculement absolu de l'axe de rotation commun perpendiculairement à la direction de marche par rapport à l'horizontale, de préférence **en ce que** le capteur de position comprend un capteur d'accélération et/ou un gyroscope et/ou un système de positionnement par satellite.

14. Dispositif de commande selon la revendication 12, **caractérisé en ce que** le capteur de position est conçu pour déterminer le basculement relatif entre l'axe de rotation commun et le véhicule (1) perpendiculairement à la direction de marche, de préférence **en ce que** le capteur de position comprend un capteur à effet Hall et/ou un potentiomètre et/ou un dispositif de mesure par induction et/ou un capteur de déplacement.

15. Dispositif de commande selon l'une des revendications 12 à 14, **caractérisé en ce que** l'axe de rotation commun est un axe monté en suspension pendulaire, en particulier un essieu avant du véhicule.

16. Dispositif de commande selon la revendication 10, **caractérisé en ce que** l'unité d'exploration est conçue pour explorer sans contact le sol, de préférence **en ce que** l'unité d'exploration est une unité d'exploration à ultrasons et/ou une unité d'exploration à radar et/ou une unité d'exploration à faisceau laser.

17. Dispositif de commande selon l'une des revendications 9 à 16, **caractérisé en ce que** le dispositif de commande est conçu pour la mise en oeuvre d'un procédé selon l'une des revendications 1 à 8.

18. Dispositif de maintien (2) pour une machine (3) de traitement de plantes, qui peut être disposé sur un véhicule (1), comprend un dispositif de commande et est conçu de telle sorte que, le dispositif de maintien (2) étant disposé sur le véhicule (1), une machine (3) installée sur le dispositif de maintien (2) peut, en fonction de signaux de commande du dispositif de commande et au moyen du dispositif de maintien (2), être déplacée en direction d'un plan médian du véhicule et/ou en éloignement de ce plan,
**caractérisé en ce que** le dispositif de commande est conçu selon l'une des revendications 9à17.
